# EUROPEAN PATENT SPECIFICATION

(11) **EP 1 907 477 B1**
(45) Date of publication and mention of the grant of the patent: **08.09.2010**
(21) Application number: 05780638.2
(22) Date of filing: 13.07.2005
(51) Int. Cl.: C08L 69/00

(54) **POLYCARBONATE RESIN COMPOSITION WITH GOOD LIGHT REFLECTANCE**
POLYCARBONATHARZZUSAMMENSETZUNG MIT GUTEM LICHTREFLEXIONSGRAD
COMPOSITION DE RÉSINE DE POLYCARBONATE AYANT UN BON FACTEUR DE RÉFLEXION DE LA LUMIÈRE

(30) Priority: 30.06.2005 KR 20050057881
(43) Date of publication of application: 09.04.2008
(73) Proprietor: Cheil Industries Inc., Gumi-si, Gyeongsangbuk-do 730-710 (KR)
(72) Inventor: JUNG, Hyuk Jin, Gunpo-si, Gyeonggi-do 435-764 (KR); LIM, Jong Cheol, Gyeonggi-do 431-742 (KR); KANG, Tae Gon, Gyeonggi-do 440-709 (KR)
(74) Representative: Bublak, Wolfgang
(86) International application number: PCT/KR2005/002252
(87) International publication number: WO 2007/004762

(56) References cited:
- EP-A2- 1 010 725
- WO-A-02/36688
- JP-A- 08 199 055
- JP-A- 09 012 853
- JP-A- 2001 302 899

## Description

### Technical Field

The present invention relates to a polycarbonate resin composition. More particularly, the present invention relates to a polycarbonate resin composition that comprises a polycarbonate resin, a poly(meth)acrylic acid alkyl ester resin, a titanium dioxide, an impact modifier and a UV absorbent with a specific structure, which has good light resistance and light reflectance after UV irradiation, while maintaining good impact strength and flowability.

### Background Art

Polycarbonate resin is engineering plastic that is excellent in mechanical strength, heat resistance and transparency, therefore, the resin is widely applied to office supplies, electric or electronic goods, construction materials, etc. However, the polycarbonate resin has poor processability and notched impact strength. In order to overcome the shortcomings, the polycarbonate resin is blended with other polymer resin(s). For example, a blend of a polycarbonate resin and an acrylonitrile-butadiene-styrene (ABS) grafted polymer is a resin composition which has improved processability and as it maintains the good notched impact strength.

In the field of electric or electronic goods, high light reflectance, light resistance, coloration property, etc. are required to a resin that is applied to back-light parts of LCD (Liquid Crystalline Display). Flowability is also required to the resin because electronic goods (e.g. television, monitor, notebook, etc.) have a tendency to be slim and thin lately.

In case of using polycarbonate resin as back-light parts of LCD, it is generally employed as back-light frame that the resin is colored with high white for reducing a loss of back-light to the minimum when the resin is reflected. Thus a titanium dioxide (TiO₂) which has the largest refraction index in the air is mostly employed as white pigment for coloring the resin with high white.

Japanese Patent Publication No. 63-26,140 discloses the polycarbonate resin composition employing a titanium dioxide for reflection index. However, the disadvantages could be observed that the composition of this invention results in decrease in brightness and color fastness because of transmission of light that is cause by decrease of light exclusion index. Also, fluidity is decrease when processing, resulting that the inferiority of surface of product is occurred.

Japanese Patent Publication No. H09-012,853 discloses a flame retardant resin composition that comprises a polycarbonate resin, a titanium dioxide, a polyorganosiloxane-polyalkylacrylate rubber, a flame retardant and a polytetrafluoroe thylene resin, and U.S. Patent No. 5,837,757 discloses a flame retardant resin composition that comprises a polycarbonate resin, a titanium dioxide, a stilbene-bisbenzoxazole derivatives and a phosphoric acid ester compound.

The resin compositions maintain high light reflectance before contact with back-light source of LCD. However, if they contact with light source for a long time, the light reflectance is decreased on account of occurrence of yellowing it is their disadvantage.

The present inventors have developed a polycarbonate resin composition that comprises a polycarbonate resin, a poly(meth)acrylic acid alkyl ester resin, a titanium dioxide, a impact modifier and a UV absorbent having a specific structure, which has good light reflectance after UV irradiation and little yellowing, while maintaining good mechanical strength, impact resistance, and so on.

### Disclosure of Invention

### Technical Problem

A feature of the present invention is the provision of a polycarbonate resin composition with good light reflectance.

Another feature of the present invention is the provision of a polycarbonate resin composition with good light resistance and impact resistance.

A further feature of the present invention is the provision of a polycarbonate resin composition which has a good balance of physical properties such as processability, appearance, etc.

Other objects and advantages of this invention will be apparent from the ensuing disclosure and appended claims.

### Technical Solution

The present invention relates to a polycarbonate resin composition that comprises (A) 50 to 95 parts by weight of a polycarbonate resin, (B) 5 to 50 parts by weight of a poly(meth)acrylic acid alkyl ester resin, (C) 1 to 30 parts by weight of a titanium dioxide, (D) 1 to 50 parts by weight of a vinyl graft copolymer prepared by graft-polymerizing (d₁) 5 to 95 parts by weight of a monomer mixture consisting of (d₁₁) 50 to 95 parts by weight of styrene, α-methylstyrene, halogen or alkyl-substituted styrene, C₁-C₈ methacrylic acid alkyl ester, C₁-C₈ acrylic acid alkyl ester or a mixture thereof and (d₁₂) 5 to 50 by weight of acrylonitrile, methacrylonitrile, C₁-C₈ methacrylic acid alkyl ester, C₁-C₈ acrylic acid alkyl ester, maleic anhydride, C₁-C₄ alkyl- or phenyl N-substituted maleimide or a mixture thereof onto (d₂) 5 to 95 parts by weight of a rubber polymer selected from the group consisting of acryl rubber, ethylene-propylene rubber, polyorganosiloxane-polyalkyl(meth)acrylate rubber or a mixture of there of and (E) 0.1 to 3 parts by weight of a UV absorbent.

### Best Mode for Carrying Out the Invention

The components of the polycarbonate resin according to the present invention are described in detail as follow:

(A) Polycarbonate Resin

The polycarbonate resin is prepared by a diphenol represented by the following chemical formula (I) with a phosgene, a halogen formate or a carboxylic acid diester:

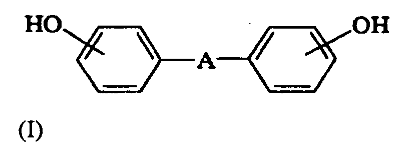

wherein A is a single bond, a C₁-C₅ alkylene group, C₁-C₅ alkylidene group, C₅-C₆ cycloalkylidene group, S or SO₂.

The examples of the diphenol include hydroquinone, resorcinol, 4,4'-dihydroxydiphenol, 2,2-bis-(4-hydroxyphenyl)-propane, 2,4-bis-(4-hydroxyphenyl)-2-methylbutane, 1,1-bis-(4-hydroxyphenyl)-cyclohexane, 2,2-bis-(3-chloro-4-hydroxyphenyl)-propane, and 2,2-bis-(3,5-dichloro-4-hydroxyphenyl)-propane.

More preferable diphenols are 2,2-bis-(4-hydroxyphenyl)-propane, 2,2-bis-(3,5-dichloro-4-hydroxyphenyl)-propane, and 1,1-bis-(4-hydroxyphenyl)-cyclohexane, and the most preferable diphenol is 2,2-bis-(4-hydroxyphenyl)-propane called 'bisphenol A'.

In the present invention, it is preferable that the polycarbonate resin (A) has a weight average molecular weight (M_{w}) of about 10,000 to 200,000, more preferably w about 15,000 to 80,000.

Suitable polycarbonates incorporated into the composition of the present invention may be branched in a known manner, in particular preferably by incorporation 0.05 to 2 mol %, based to total quantity of diphenols used, of tri- or higher functional compounds, for example, those with three or more phenolic groups.

A homopolymer of polycarbonate, a copolymer of polycarbonate or a mixture thereof may be used in this invention.

Also, some portion of the polycarbonate resin may be replaced with an aromatic polyester-carbonate resin that is obtained by polymerization in the presence of an ester precursor, such as difunctional carboxylic acid.

In the present invention it is preferable that the polycarbonate resin (A) is used in an amount of 50 to 95 parts by weight as per the polycarbonate resin composition according to the present invention. If the polycarbonate resin (A) is used in less than 50 parts by weight, impact resistance and heat resistance are deteriorated;

(B) Poly(meth)acrylic Acid Alkyl Ester Resin

The poly(meth)acrylic acid alkyl ester resin is prepared by bulk, emulsion, suspension or solution polymerization a monomer such as C₁-C₈ acrylic acid alkyl ester or C₁-C₈ methacrylic acid alkyl ester represented by the following chemical formula (II):

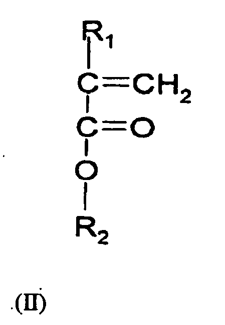

wherein R₁ is H or methyl and R₂ is a C₁-C₈ alkyl group.

The C₁-C₈ methacrylic acid alkyl ester is obtained from methacrylic acid and monohydryl alcohol containing 1 to 8 carbon atoms and C₁-C₈ acrylic acid alkyl ester from acrylic acid and monohydryl alcohol containing 1 to 8 carbon atoms. The examples of acid alkyl ester include methacrylic acid methyl ester, methacrylic acid ethyl ester, acrylic acid ethyl ester and methacrylic acid propyl ester. Among them, methacrylic acid methyl ester is the most preferable.

In the present invention it is preferable that the poly(meth)acrylic acid alkyl ester resin (B) has a weight average molecular weight (Mw) of about 10,000 to 500,000, more preferably about 15,000 to 350,000.

In the present invention, the poly(meth)acrylic acid alkyl ester resin (B) is preferably used an amount of 5 to 50 parts by weight. If the poly(meth)acrylic acid alkyl ester resin (B) is used less than 5 parts by weight, light reflectance after UV irradiation cannot be obtained. On the other hand, if the poly(meth)acrylic acid alkyl ester resin (B) is used in excess of 50 parts by weight, impact resistance and heat resistance are deteriorated.

(C) Titanium dioxide

In the present invention, a general titanium dioxide can be used as the titanium dioxide (C), and its process and size are not limited. In the present invention, the titanium dioxide (C) is preferably surface-treated with inorganic or organic surface treating agent.

Examples of the inorganic surface treating agents include aluminium oxide (alumina, Al₂O₃), silicon dioxide (silica, SiO₂), zirconia (zirconium dioxide, ZrO₂), sodium silicate, sodium aluminate, sodium aluminium silicate, mica, and so on.

Examples of the organic surface treating agents include polydimethylsiloxane, trimethylpropane (TMP), pentaerythritol, etc. The surface treating agent coats the titanium dioxide (C) with an amount of about 0.3 parts by weight per 100 parts by weight of the titanium dioxide.

In the present invention, titanium dioxide coated with less than 2 parts by weight of alumina (Al₂O₃) is preferably used.

Also, the titanium dioxide coated with alumina is further modified by an inorganic surface treatment agent such as silicon dioxide, zirconium dioxide, sodium silicate, sodium aluminate, sodium aluminium silicate and mica, etc. and organic surface treatment agent such as polydimethylsiloxane, trimethylpropane (TMP) and pentaerythritol and can be used in the present invention.

In the present invention, the titanium dioxide (C) is preferably used in an amount of 1 to 30 parts by weight. If the titanium dioxide (C) is used in less than 1 part by weight, light reflectance after UV irradiation cannot be obtained. On the other hand, if the titanium dioxide (C) is used in excess of 30 parts by weight, impact resistance is deteriorated.

(D) Rubber Modified Vinyl Graft Copolymer

The rubber modified vinyl graft copolymer (D) according to the present invention is prepared by graft-polymerizing (d₁) 5 to 95 parts by weight of a monomer mixture consisting of (d₁₁) 50 to 95 parts by weight of styrene, α-methylstyrene, halogen or alkyl-substituted styrene, C₁-C₈methacrylic acid alkyl ester, C₁-C₈ acrylic acid alkyl ester or a mixture thereof and (d₁₂) 5 to 50 by weight of acrylonitrile, methacrylonitrile, C₁-C₈ methacrylic acid alkyl ester, C₁-C₈ acrylic acid alkyl ester, maleic anhydride, C₁-C₄ alkyl- or phenyl N-substituted maleimide or a mixture thereof onto (d₂) 5 to 95 parts by weight of a rubber polymer selected from the group consisting of acryl rubber, ethylene-propylene rubber, polyorganosiloxanepolyalkyl(meth)acrylate rubber or a mixture of there of.

The C₁-C₈ methacrylic acid alkyl ester is obtained from methacrylic acid and monohydryl alcohol containing 1 to 8 carbon atoms and C₁-C₈ acrylic acid alkyl ester from acrylic acid and monohydryl alcohol containing 1 to 8 carbon atoms. The examples of C₁-C₈ methacrylic acid alkyl ester include methacrylic acid methyl ester, methacrylic acid ethyl ester, acrylic acid ethyl ester and methacrylic acid propyl ester. Among them, methacrylic acid methyl ester is the most preferable.

The preferable examples of the vinyl graft copolymer (D) are those prepared by polymerizing a butylacrylate rubber with a monomer mixture consisting of styrene, acrylonitrile and optionally (meth)acrylic acid alkyl ester monomer.

Another preferable examples of the vinyl graft copolymer (D) are those prepared by polymerizing an acyrilc rubber or a polyorganosiloxane/polyalkyl(meth)acrylate rubber complex with a (meth)acrylic acid methyl ester or optionally a monomer mixture with acrylic acid methyl ester or acrylic acid ethyl ester.

The size of the rubber polymer (d₂) of the present invention is preferably in the range of 0.05 to 4 mm for improvement of impact resistance and a surface feature of product.

The graft copolymer according to the present invention can be prepared through a conventional polymerization process such as bulk, emulsion, suspension, and solution process. Among these processes, preferable is the emulsion or bulk polymerization in which said aromatic vinyl monomers are added to the rubber polymer using a polymerization initiator.

In the present invention, the rubber modified vinyl graft copolymer (D) is preferably used in an amount of 1 to 50 parts by weight. If the vinyl graft copolymer (D) is used in less than 1 part by weight, impact resistance is deteriorated. On the other hand, if the vinyl graft copolymer (D) is used in excess of 50 parts by weight, heat resistance and light reflectance are deteriorated.

(E) UV Absorbent

In the present invention, a benzotriazole, a benzophenone or a triazine compound represented by the following chemical formula (III), (IV) and (V) respectively can be used as a UV absorbent.

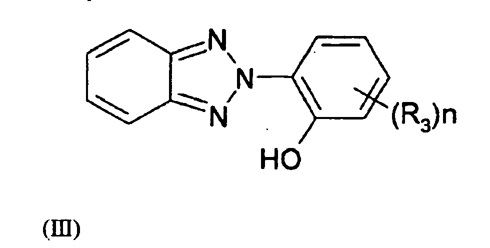

wherein R₃ is a C₁-C₁₀ alkyl group or alkyl-substituted phenyl and n is 1 or 2.

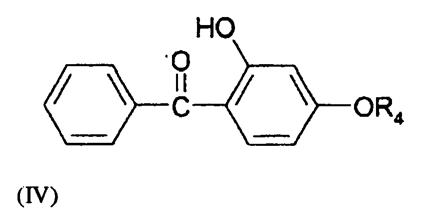

wherein R is H, a C -C alkyl group or alkyl-substituted phenyl.

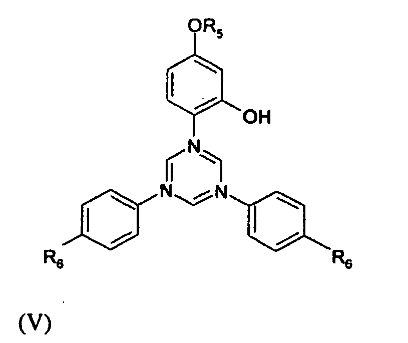

wherein R₅ is H, a C₁-C₁₈ alkyl group, a C₂-C₆ halogen-substituted alkyl group, a C₁-C₁₂ alkoxy group or benzyl group and R₆ is H or methyl.

In the present invention, the preferable examples of the benzotriazol based UV absorbent include 2-(2'-hydroxy-5'-methylphenyl)benzotriazole, 2-[2'-hydroxy-3',5'-bis(α,α-dimethylbenzyl)phenyl]benzotriazole, 2-(2'-hydroxy-3',5'-di-t-butylphenyl)benzotriazole, 2-(2'-hydroxy-3'-t-butyl-5'-methylphenyl)-5-chlorobenzotriazole, 2-(2'-hydroxy-3',5'-di-t-butylphenyl)-5-chlorobenzotriazole, 2-(2'-hydroxy-3',5'-di-t-amyl)benzotriazole, 2-(2'-hydroxy-5'-t-octylphenyl)benzotriazole, and 2,2'-mehylene-bis[4-(1,1,3,3,-tetramehylbutyl)-6-(2N-benzotriazol-2-yl)phenol].

In the present invention, the preferable examples of the benzophenone based UV absorbent include 2,4-hydroxybenzophenone, 2,4-hydroxy-4-methoxybenzophenone, 2,4-hydroxy-4-methoxybenzophenon-5-sulfonic acid, 2,4-hydroxy-4-n-octyloxybenzophenone, 2,4-hydroxy-4-n-dodecyloxybenzophenone, bis(5-benzoyl'-4-hydroxy-2-methoxyphenyl)methane, 2,2'-dihydroxy-4-methoxybenzophenone, and 2,2'-dihydroxy-4,4'-dimethoxybenzophenone.

In the present invention, the preferable examples of the triazine based UV absorbent include 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-6-(2-hydroxy-4-propoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-pentoxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, 2,4-diphenyl-6-(2-hydroxy-4-benzyloxyphenyl)-1,3,5-triazine, 2,4-diphenyl-6-(2-hydroxy-4-(2-butoxyethoxy)phenyl)-1,3,5-triazine, 2,4-di-p-tolyl-6-(2-hydroxy-4-propoxyphenyl)-1,3,5-triazine, 2,4-di-p-tolyl-6-(2-hydroxy-4-butoxyphenyl)-1,3,5-triazine, 2,4-di-p-tolyl-6-(2-hydroxy-4-hexyloxyphenyl)-1,3,5-triazine, 2,4-di-p-tolyl-6-(2-hydroxy-4-pentoxyphenyl)-1,3,5-triazine, 2,4-di-p-tolyl-6-(2-hydroxy-4-octyloxyphenyl)-1,3,5-triazine, 2,4-di-p-tolyl-6-(2-hydroxy-4-benzyloxyphenyl)-1,3,5-triazine, and 2,4-di-p-tolyl-6-(2-hydroxy-4-(2-hexyloxyethoxy)phenyl)-1,3,5-triazine.

Among them, the triazine based UV absorbent is the most preferable.

In the present invention, the UV absorbent (E) is preferably used in an amount of 0.1 to 3 parts by weight. If the UV absorbent (E) is used in less than 0.1 parts by weight, light reflectance is deteriorated. On the other hand, if the UV absorbent (E) is used in excess of 3 parts by weight, impact resistance and heat resistance are deteriorated.

Other additives may be contained in the polycarbonate resin composition with good light reflectance of the present invention according to use. The additives include a fluorescent brightener, a flame retardant, a flame retardant aid, a lubricant, a releasing agent, a nuclear agent, an anti-static agent, a stabilizer, a reinforcing agent, an inorganic additive, a pigment, a dye, etc. The additives are employed in an amount of 0 to 60 parts by weight, preferably 1 to 40 parts by weight, per 100 parts by weight of the base resin.

The stilbene-bisbenzoxazole derivative can be used as a fluorescent brightener which improves light reflectance of the polycarbonate resin composition. The examples of the stilbene-bisbenzoxazole derivative include 4-(benzoxazole-2-yl)-4'-(5-methylbenzoxazole-2-yl)stilbene[4-(benzoxazole-2-yl)-4'-( 5-methylbenzoxazol-2-yl)stilbene] and 4,4'-bis(benzoxazole-2-yl)stilbene[4,4'-bis(benzoxazole-2-yl)stilbene], etc.

The polycarbonate resin composition according to the present invention can be prepared by a conventional method. All the components and additives are mixed together and extruded through an extruder and are prepared in the form of pellets.

According to the present invention, the polycarbonate resin composition can be applied to various goods, particularly electric or electronic goods such as back-light parts of LCD which requires high light reflectance and processability.

The invention may be better understood by reference to the following examples which are for the purpose of illustration and are not to be construed as in any way limiting the scope of the present invention, which is defined in the claims appended hereto. In the following examples, all parts and percentage are by weight unless otherwise indicated.

### Mode for the Invention

**Examples**

(A) Polycarbonate Resin

Bisphenol-A type linear polycarbonate resin with a weight average molecular weight (M_{w}) of 25,000 g/mol manufactured by TEIJIN (product name : PANLITE L-1250 WP) was used.

(B) Poly(meth)acrylic Acid Alkyl Ester Resin

Polymethylmethacrylate manufactured by LG MMA (product name: IF-850) was used.

(C) Titanium Dioxide

Titanium dioxide manufactured by Millennium of America (product name: TIONA RL-91) was used.

(D) Rubber Modified Vinyl Graft Copolymer

(d₁) Metablen S2001 by MRC of Japan prepared by graft polymerizing methacrylic acid methyl ester monomer onto a rubber mixture consisting of polybutylacrylate and polydimethylsiloxane rubber was used.

(d₂) EM-100 by LG Chemical of Korea prepared by graft polymerizing methacrylic acid methyl ester monomer onto polybutylacrylate rubber was used.

(d₃) Paraloid EXL-2602 by Rohm & Haas of U.S.A prepared by graft polymerizing methacrylic acid methyl ester monomer onto polybutadiene rubber was used.

(E) UV Absorbent

2-(4,6-diphenyl-1,3,5-triazine-2-yl)-5-hexyloxyphenol manufactured by Ciba of Swiss (product name: Tinuvin 1577FF) was used.

**Examples 1-4**

The components as shown in Table 1 were mixed in a conventional mixer, which were added antioxidant and heat stabilizer and the mixture was extruded through a twin screw extruder with L/D=35, Φ=45 mm to prepare a product resin in pellet form. The resin pellets molded into test specimens using a 10 oz injection molding machine at injection temperature of 250°C. These test specimens was measured in accordance with ASTM after leaving at 23°C and 50% relative humidity for 48 hours.

(1) The light reflectance and the yellow index were measured by ASTM G53 UV Condensation machine and Minolta 3600D CIE Lab. Color difference meter, for before and after UV irradiation.

(2) The notch IZOD impact strength (kgf·cm/cm) was measured in accordance with ASTM D256.

(3) The melt flow index was measured in accordance with ASTM D1238 at 250°C, 10 kgf.

**Comparative Example 1**

The comparative example 1 was conducted in the same manner as in Example 1 except that a poly(meth)acrylic acid alkyl ester resin (B) was not used and the amount of the polycarbonate resin (A) was 100 parts by weight.

**Comparative Example 2**

The comparative example 2 was conducted in the same manner as in Example 1 except that Paraloid EXL-2602 resin (d₃) was used as rubber modified vinyl graft copolymer (D).

**Comparative Example 3**

The comparative example 3 was conducted in the same manner as in Example 3 except that a titanium dioxide (C) was not used.

**Comparative Example 4**

The comparative example 4 was conducted in the same manner as in Example 2 except that a UV absorbent (E) wasnot used.

**Comparative Example 5**

The comparative example 5 was conducted in the same manner as in Example 1 except that a polycarbonate resin (A) and a poly(meth)acrylic acid alkyl ester resin (B) was used in out of range of the present invention.

The test results of the components of the example 1-4 and comparative example 1-5 are shown in Table 1.

**Table 1**

| | | Example | | | | Comparative Example | | | | |
|---|---|---|---|---|---|---|---|---|---|---|
| | | 1 | 2 | 3 | 4 | 1 | 2 | 3 | 4 | 5 |
| (A) Polycarbonate Resin | | 60 | 70 | 90 | 70 | 100 | 60 | 90 | 70 | 10 |
| (B) Poly(meth)acrylic Acid Alkyl Ester Resin | | 40 | 30 | 10 | 30 | - | 40 | 10 | 30 | 90 |
| (C) Titanium Dioxide | | 10 | 10 | 10 | 10 | 10 | 10 | - | 10 | 10 |
| (D) Rubber Modified Vinyl Gmft Copolymer | (d₁) | 10 | 8 | 3 | - | 10 | - | 3 | 8 | 10 |
| | (d₂) | - | - | - | 8 | - | - | - | - | - |
| | (d₃) | - | - | - | - | - | 10 | - | - | - |
| (E) UV Absorbent | | 1 | 1 | 1 | 1 | 1 | 1 | 1 | - | 1 |
| Light Reflectance(400-700 nm) | Before UV irradiation | 95.0 | 94.5 | 95.0 | 94.3 | 93.8 | 94.0 | 46.1 | 94.6 | 95.4 |
| | After UV irradiation for 24h | 93.1 | 92.7 | 92.1 | 92.4 | 88.3 | 85.2 | 38.4 | 84.1 | 93.3 |
| Yellow Index | Before UV irradiation | 2.46 | 2.50 | 2.45 | 2.48 | 2.38 | 2.54 | 2.41 | 1.17 | 2.25 |
| | After UV irradiation for 24h | 7.21 | 7.52 | 8.63 | 7.38 | 12.4 5 | 14.5 1 | 13.2 7 | 14.1 8 | 10.4 5 |
| IZOD Impact Strength (1/8") | | 68 | 72 | 73 | 71 | 74 | 65 | 71 | 73 | 7 |
| Melt Flow Index | | 43 | 32 | 21 | 30 | 21 | 41 | 18 | 32 | 110 |

As shown in Table 1, in case of Comparative Example 1 not using a poly(meth)acrylic acid alkyl ester resin (B), the light reflectance is deteriorated and yellow index is great increased after UV irradiation for 24h.

Comparative Example 2 using component (d₃) instead of component (d₁) shows that the light reflectance is deteriorated and that yellow index is increased after UV irradiation for 24h.

Comparative Example 3 which does not use titanium dioxide (C) shows that the light reflectance is great deteriorated and that yellow index is great increased after UV irradiation for 24h.

Also, Comparative Example 4 not employing a UV absorbent (E) indicated that the light reflectance is deteriorated and that yellow index is great increased after UV irradiation for 24h.

In case of Comparative Example 5 wherein polycarbonate resin (A) and poly(meth)acrylic acid alkyl ester resin (B) was used in out of range of the present invention., the IZOD impact strength is great deteriorated.

In conclusion, a polycarbonate resin composition of the present invention that comprises a polycarbonate resin, a poly(meth)acrylic acid alkyl ester resin, a titanium dioxide, a impact modifier and a UV absorbent having a specific structure, has good light reflectance and lowering change of color after UV irradiation while maintaining good IZOD impact strength and the melt flow index.

The present invention can be easily carried out by an ordinary skilled person in the art. Many modifications and changes may be deemed to be with the scope of the present invention as defined in the following claims.

## Claims

1. A polycarbonate resin composition that comprising:
(A) 50 to 95 parts by weight of a polycarbonate resin;
(B) 5 to 50 parts by weight of a poly(meth)acrylic acid alkyl ester resin;
(C) 1 to 30 parts by weight of a titanium dioxide;
(D) 1 to 50 parts by weight of a vinyl graft copolymer prepared by graft-polymerizing (d₁) 5 to 95 parts by weight of a monomer mixture consisting of (d₁₁) 50 to 95 parts by weight of styrene, α-methylstyrene, halogen or alkyl-substituted styrene, C₁-C₈ methacrylic acid alkyl ester, C₁-C₈ acrylic acid alkyl ester or a mixture thereof and (d₁₂) 5 to 50 parts by weight of acrylonitrile, methacrylonitrile, C₁-C₈ methacrylic acid alkyl ester, C₁-C₈ acrylic acid alkyl ester, maleic anhydride, C₁-C₄ alkyl- or phenyl N-substituted maleimide or a mixture thereof onto (d₂) 5 to 95 parts by weight of a rubber polymer selected from the group consisting of acryl rubber, ethylene-propylene rubber, polyorganosiloxane-polyalkyl(meth)acrylate rubber or a mixture of thereof; and
(E) 0.1 to 3 parts by weight of a UV absorbant.

2. The polycarbonate resin composition as defined in claim 1, wherein said poly(meth)acrylic acid alkyl ester resin (B) is polymethylmethacrylate resin.

3. The polycarbonate resin composition as defined in claim 1, wherein said titanium dioxide (C) is surface-treated with at least one surface treating agent selected from the group consisting of inorganic surface treating agent and organic surface treating agent.

4. The polycarbonate resin composition as defined in claim 1, wherein said C₁-C₈ methacrylic acid alkyl ester is selected from the group consisting of methacrylic acid methyl ester, methacrylic acid ethyl ester and methacrylic acid propyl ester.

5. The polycarbonate resin composition as defined in claim 1, wherein said C₁-C₈ acrylic acid alkyl ester is acrylic acid ethyl ester.

6. The polycarbonate resin composition as defined in claim 1, wherein said UV absorbent (E) is selected from the group consisting of a benzotriazole represented by the following Chemical Formula (III), a benzophenone represented by the following Chemical Formula (IV) and a triazine represented by the following Chemical Formula (V ): 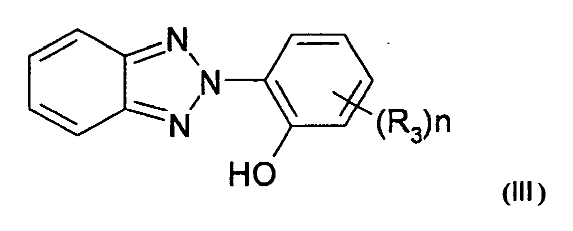 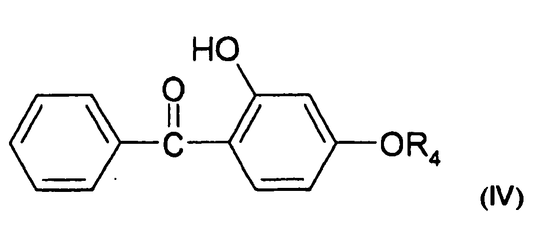 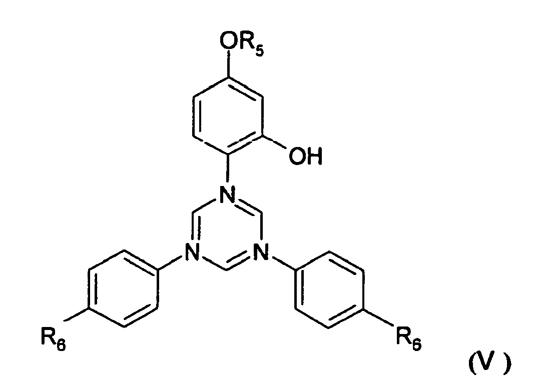 where R₃ is a C₁-C₁₀ alkyl group or alkyl-substituted phenyl; R₄ is H, a C₁-C₁₅ alkyl group or alkyl-substituted phenyl; R₅ is H, a C₁-C₁₈ alkyl group, a C₂-C₆ halogen-substituted alkyl group, a C₁-C₁₂ alkoxy group or benzyl group; R₆ is H or methyl; and n is 1 or 2.

7. The polycarbonate resin composition as defined in claim 1, which further comprises at least 60 parts by weight of an additive selected from the group consisting of fluorescent brightener, flame retardant, flame retardant aid, lubricant, releasing agent, nuclear agent, anti-static agent, stabilizer, reinforcing agent, inorganic additive, pigment, dye and a mixture of thereof.

8. A molded article produced from the polycarbonate resin composition as defined in any one of claims 1-7.

## Patentansprüche

1. Polycarbonatharzzusammensetzung, umfassend:
(A) 50 bis 95 Gewichtsteile eines Polycarbonatharzes;
(B) 5 bis 50 Gewichtsteile eines Poly(meth)acrylsäurealkylesterharzes;
(C) 1 bis 30 Gewichtsteile eines Titandioxids;
(D) 1 bis 50 Gewichtsteile eines Vinylpfropfcopolymers, hergestellt durch Pfropfpolymerisieren von (d₁) 5 bis 95 Gewichtsteilen eines Monomergemischs, bestehend aus (d₁₁) 50 bis 95 Gewichtsteilen Styrol, α-Methylstyrol, halogen- oder alkylsubstituiertes Styrol, C₁-C₈-Methacrylsäurealkylester, C₁-C₈-Acrylsäurealkylester oder einem Gemisch davon und (d₁₂) 5 bis 50 Gewichtsteilen Acrylnitril, Methacrylnitril, C₁-C₈-Methacrylsäurealkylester, C₁-C₈-Acrylsäurealkylester, Maleinsäureanhydrid, C₁-C₄-alkyl- oder Phenyl-N-substituiertes Maleimid oder einem Gemisch davon, auf (d₂) 5 bis 95 Gewichtsteile eines Kautschukpolymers, ausgewählt aus der Gruppe, bestehend aus Acrylkautschuk, Ethylen-Propylen-Kautschuk, Polyorganosiloxan-Polyalkyl(meth)acrylat-Kautschuk oder einem Gemisch davon; und
(E) 0,1 bis 3 Gewichtsteile eines UV-Absorptionsmittels.

2. Polycarbonatharzzusammensetzung nach Anspruch 1, wobei das Poly(meth)acrylsäurealkylesterharz (B) Polymethylmethacrylatharz ist.

3. Polycarbonatharzzusammensetzung nach Anspruch 1, wobei das Titandioxid (C) mit mindestens einem Oberflächenbehandlungsmittel, ausgewählt aus der Gruppe, bestehend aus anorganischem Oberflächenbehandlungsmittel und organischem Oberflächenbehandlungsmittel, oberflächenbehandelt ist.

4. Polycarbonatharzzusammensetzung nach Anspruch 1, wobei der C₁-C₈-Methacrylsäurealkylester ausgewählt ist aus der Gruppe, bestehend aus Methacrylsäuremethylester, Methacrylsäureethylester und Methacrylsäurepropylester.

5. Polycarbonatharzzusammensetzung nach Anspruch 1, wobei der C₁-C₈-Acrylsäurealkylester Acrylsäureethylester ist.

6. Polycarbonatharzzusammensetzung nach Anspruch 1, wobei das UV-Absorptionsmittel (E) ausgewählt ist aus der Gruppe, bestehend aus einem Benzotriazol der folgenden Chemischen Formel (III), einem Benzophenon der folgenden Chemischen Formel (IV) und einem Triazin der folgenden Chemischen Formel (V): 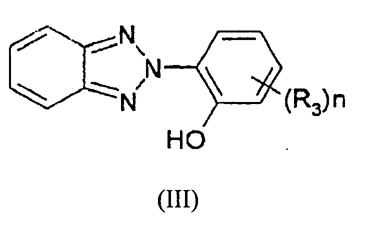 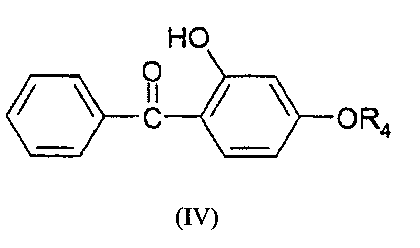 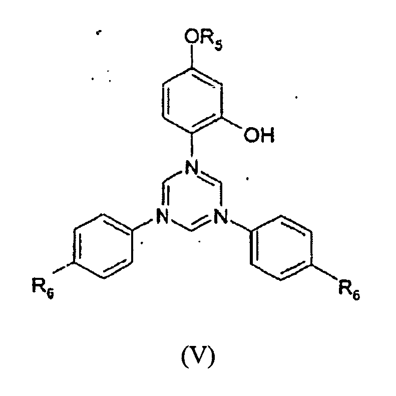 wobei R₃ eine C₁-C₁₀-Alkylgruppe oder alkylsubstituiertes Phenyl ist; R₄ H, eine C₁-C₁₅-Alkylgruppe oder alkylsubstituiertes Phenyl ist; R₅ H, eine C₁-C₁₈-Alkylgruppe, eine C₂-C₆-halogensubstituierte Alkylgruppe, eine C₁-C₁₂-Alkoxygruppe oder Benzylgruppe ist; R₆ H oder Methyl ist; und n 1 oder 2 ist.

7. Polycarbonatharzzusammensetzung nach Anspruch 1, die des Weiteren mindestens 60 Gewichtsteile eines Zusatzes umfasst, der ausgewählt ist aus der Gruppe, bestehend aus Fluoreszenzaufheller, Flammhemmer, Flammhemmerhilfe, Schmiermittel, Trennmittel, Keimbildner, Antistatikmittel, Stabilisator, Verstärkungsmittel, anorganischem Zusatz, Pigment, Farbstoff und einem Gemisch davon.

8. Formgegenstand, der aus der Polycarbonatharzzusammensetzung nach einem der Ansprüche 1-7 hergestellt ist.

## Revendications

1. Composition de résine de polycarbonate, qui comprend :
(A) 50 à 95 parties en poids d'une résine de polycarbonate ;
(B) 5 à 50 parties en poids d'une résine de poly(ester alkylique de l'acide (méth)acrylique)) ;
(C) 1 à 30 parties en poids d'un dioxyde de titane ;
(D) 1 à 50 parties en poids d'un copolymère greffé vinylique préparé par polymérisation par greffage (d₁) de 5 à 95 parties en poids d'un mélange de monomères consistant en (d₁₁) 50 à 95 parties en poids de styrène, d'α-méthylstyrène, de styrène à substitution halogéno ou alkyle, d'un ester alkylique en C₁-C₈ de l'acide méthacrylique, d'un ester alkylique en C₁-C₈ de l'acide acrylique ou d'un mélange de ces derniers, et (d₁₂) 5 à 50 parties en poids d'acrylonitrile, de méthacrylonitrile, d'un ester alkylique en C₁-C₈ de l'acide méthacrylique, d'un ester alkylique en C₁-C₈ de l'acide acrylique, d'anhydride maléique, de maléimide substitué sur l'azote par un substituant alkyle en C₁-C₄ ou phényle, ou un mélange de ces derniers, sur (d₂) 5 à 95 parties en poids d'un polymère de type caoutchouc choisi dans le groupe consistant en le caoutchouc acrylique, le caoutchouc éthylène-propylène, le caoutchouc polyorganosiloxane-poly((méth)acrylate d'alkyle) ou un mélange de ces derniers ; et
(E) 0,1 à 3 parties en poids d'un absorbant UV.

2. Composition de résine de polycarbonate selon la revendication 1, dans laquelle ladite résine de poly(ester alkylique de l'acide (méth)acrylique)) (B) est une résine de poly(méthacrylate de méthyle.

3. Composition de résine de polycarbonate selon la revendication 1, dans laquelle ledit dioxyde de titane (C) a subi un traitement de surface avec au moins un agent de traitement de surface choisi dans le groupe consistant en les agents de traitement de surface inorganiques et les agents de traitement de surface organiques.

4. Composition de résine de polycarbonate selon la revendication 1, dans laquelle ledit ester alkylique en C₁-C₈ de l'acide méthacrylique est choisi dans le groupe consistant en l'ester méthylique de l'acide méthacrylique, l'ester éthylique de l'acide méthacrylique et l'ester propylique de l'acide méthacrylique.

5. Composition de résine de polycarbonate selon la revendication 1, dans laquelle ledit ester alkylique en C₁-C₈ de l'acide acrylique est l'ester éthylique de l'acide acrylique.

6. Composition de résine de polycarbonate selon la revendication 1, dans laquelle ledit absorbant UV est choisi dans le groupe consistant en un benzotriazole ayant la formule chimique (III) ci-après, une benzophénone représentée par la formule chimique (IV) ci-après et une triazine représentée par la formule chimique (V) ci-après : 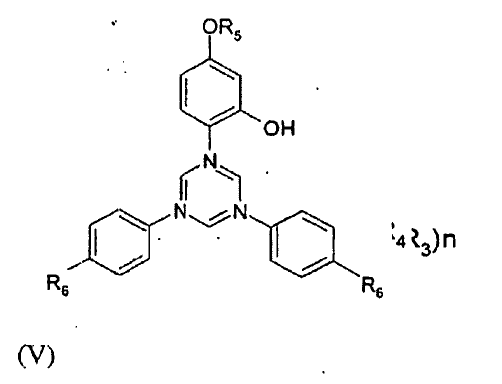 où R₃ est un groupe alkyle en C₁-C₁₀ ou phényle à substitution alkyle ; R₄ est H, un groupe alkyle en C₁-C₁₅ ou phényle à substitution alkyle ; R₅ est H, un groupe alkyle en C₁-C₁₈, un groupe alkyle en C₂-C₆ halogéné, un groupe alcoxy en C₁-C₁₂ ou benzyle ; R₆ est H ou le groupe méthyle ; et n vaut 1 ou 2.

7. Composition de résine de polycarbonate selon la revendication 1, qui comprend en outre au moins 60 parties en poids d'un additif choisi dans le groupe consistant en un azurant fluorescent, un retardateur de flamme, un auxiliaire de retardateur de flamme, un lubrifiant, un agent de démoulage, un agent de nucléation, un agent antistatique, un stabilisant, un agent de renfort, un additif inorganique, un pigment, un colorant ou un mélange de ceux-ci.

8. Objet moulé produit à partir de la composition de résine de polycarbonate selon l'une quelconque des revendications 1 à 7.
